# EUROPÄISCHE PATENTANMELDUNG

(11) **EP 1 258 835 A2**
(43) Veröffentlichungstag der Anmeldung: **20.11.2002**
(21) Anmeldenummer: 02100387.6
(22) Anmeldetag: 17.04.2002
(51) Int. Cl.: G06T 11/00

(54) **Verfahren zur Rekonstruktion von Bildern aus Röntgen-Kegelstrahl-Projektionsdaten**

(30) Priorität: 19.04.2001 DE 10119105
(71) Anmelder: Philips Corporate Intellectual Property GmbH, 20099 Hamburg (DE); Koninklijke Philips Electronics N.V., 5621 BA Eindhoven (NL)
(72) Erfinder: Klotz, Erhard, 52066, Aachen (DE); Koppe, Reiner Dr., 52066, Aachen (DE); Schomberg, Hermann Dr., 52066, Aachen (DE)
(74) Vertreter: Volmer, Georg, Dipl.-Ing.

(57) **Zusammenfassung**

Die Erfindung betrifft ein Verfahren zur Rekonstruktion von Bildern aus Kegelstrahl-Projektionsdaten eines Untersuchungsbereiches (3) eines Untersuchungsobjektes. Die Kegelstrahl-Projektionsdaten werden mittels einer Röntgeneinrichtung erfasst, welche eine Röntgenquelle (1) und einen Röntgenbildverstärker (2) aufweist, wobei die Röntgenquelle (1) zur Erfassung der Projektionsdaten entlang einer Trajektorie um den Untersuchungsbereich (3) geführt wird. Dabei werden erste Projektionsdaten des Untersuchungsbereiches (3) in einer ersten Betriebsart des Röntgenbildverstärkers (2) erfasst, wobei die erste Betriebsart eine geringe Auflösung aufweist. Zweite Projektionsdaten werden für einen Teilbereich (4) des Untersuchungsbereiches (3) in einer zweiten Betriebsart des Röntgenbildverstärkers (2) erfasst, wobei die zweite Betriebsart eine hohe Auflösung aufweist. Anschließend werden die ersten und zweiten Projektionsdaten zu dritten Projektionsdaten kombiniert. Die dritten Projektionsdaten werden in dem Teilbereich (4) des Untersuchungsbereiches (3) durch die zweiten Projektionsdaten und in dem restlichen Bereich (3a) des Untersuchungsbereiches (3) durch die ersten Projektionsdaten dargestellt. Eine Rekonstruktion der Bilder erfolgt anhand der dritten Projektionsdaten. Die Erfindung betrifft ferner eine entsprechende Röntgeneinrichtung, insbesondere eine C-Bogen-Röntgeneinrichtung.

## Beschreibung

Die Erfindung betrifft ein Verfahren zur Rekonstruktion von Bildern aus Röntgen-Kegelstrahl-Projektionsdaten sowie eine entsprechende Röntgeneinrichtung.

Es ist bekannt, ein C-Bogen-Röntgensystem zur Bildgebung einzusetzen. Dabei wird zunächst ein Satz von Röntgen-Kegelstrahlprojektionen eines Untersuchungsbereiches eines Gegenstandes bzw. eines Untersuchungsobjektes gewonnen. Anschließend wird aus diesem Satz von Kegelstrahlprojektionen die zwei- oder dreidimensionale Verteilung des Röntgenschwächungskoeffizienten innerhalb des abzubilden Untersuchungsbereiches rekonstruiert. Diese Verteilung dient als 2D oder 3D Bild dieses Untersuchungsbereiches.

Üblicherweise ist der zu untersuchende Gegenstand ein menschlicher Körper. Der für die Projektion verwendete Kegelstrahl wird von einer nahezu punktförmigen Röntgenquelle (die Spitze des Kegels) und der sensitiven Fläche des Röntgendetektors, welche durch Umschalten der Elektronenoptik verkleinert werden kann, gebildet. Der abzubildende Untersuchungsbereich befindet sich dabei zwischen der Röntgenquelle und dem Detektor. Die an einem Ende des C-Bogensystems befestigte Röntgenquelle wird längst einer vorgegebenen Trajektorie um den abzubildenden Untersuchungsbereich herumgeführt, um einen Satz von Kegelstrahlprojektionen zu erhalten. In kurzen zeitlichen bzw. räumlichen Abständen wird eine Kegelstrahlprojektion nach der anderen gemessen. Die Trajektorie liegt bauartbedingt zumindest näherungsweise auf der Oberfläche einer Kugel, deren Mittelpunkt das Isozentrum des C-Bogensystemes ist.

Mit einer geeignet gewählten Trajektorie lässt sich ein kugelförmiges Volumen als Untersuchungsbereich abbilden. Der Durchmesser dieser Kugel hängt dabei nur wenig von der Wahl der Trajektorie sondern vielmehr von der Größe des Detektors und einigen anderen geometrischen Parametern ab. In der Praxis beträgt dieser Durchmesser bis zu ca 30 cm. Ein menschlicher Körper als Untersuchungsobjekt passt offensichtlich nicht in eine derart kleine Kugel hinein, d. h. die Kegelstrahlprojektionen werden notwendigerweise abgeschnitten, und der Kegelstrahl überdeckt nicht den ganzen Körper. Das Bild des Untersuchungsbereiches wird aber eindeutig durch alle Kegelstrahlprojektionen entlang der Trajektorie bestimmt, sofern die Projektionen nicht abgeschnitten sind

Abgeschnittene Kegelstrahlprojektionen haben zur Folge, dass das Bild des Untersuchungsbereiches nicht immer eindeutig zu bestimmen ist. Dies wirkt sich im Inneren der Kugel relativ geringfügig aus. Es kann aber am Rande der Kugel zu starken Variationen kommen. Derartige Variationen wirken sich negativ auf die Bildqualität, insbesondere am Rande des darzustellenden Untersuchungsbereiches, aus. Bei der Rekonstruktion von abgeschnittenen Kegelstrahlprojektionen entstehen Artefakte, welche die Bildqualität reduzieren.

Bei Röntgenbildverstärkern kann durch Änderung der Fokussierungsspannung unter Beibehaltung der Anodenspannung zwischen verschiedenen Eingangsfelddurchmessern umgeschaltet werden. Wenn der Eingangsfelddurchmesser verkleinert wird, steigt die Auflösung Andererseits wird der abbildbare Untersuchungsbereich bei steigender Auflösung reduziert, da der Eingangsfelddurchmesser verkleinert wird. Mit anderen Worten vergrößert sich der negative Effekt, der auftritt, wenn Kegelstrahlprojektionen abgeschnitten werden, mit steigender Auflösung und entsprechend verkleinertem Eingangsfelddurchmesser.

Es ist daher Aufgabe der Erfindung, ein Verfahren und eine Röntgeneinrichtung vorzusehen, welche es ermöglichen, den negativen Effekt der abgeschnittenen Röntgen-Kegelstrahlprojektionen auf die Bildqualität zu vermindern.

Die Erfindung wird durch ein Verfahren gemäß Anspruch 1 sowie eine Röntgeneinrichtung gemäß Anspruch 5 gelöst.

Der Erfindung liegt dabei der Gedanke zu Grunde, Kegelstrahl-Projektionsdaten eines Untersuchungsbereiches eines Untersuchungsobjektes mittels einer Röntgeneinrichtung zu erfassen, welche eine Röntgenquelle und einen Röntgenbildverstärker aufweist, wobei die Röntgenquelle zur Erfassung der Projektionsdaten entlang einer Trajektorie um den Untersuchungsbereich geführt wird. Zunächst wird der Röntgenbildverstärker in einer ersten Betriebsart betrieben, welche eine geringe Auflösung aufweist. In dieser ersten Betriebsart werden erste Projektionsdaten des Untersuchungsbereiches erfasst. Dann wird der Röntgenbildverstärker in einer zweiten eine hohe Auflösung aufweisenden Betriebsart betrieben. In dieser zweiten Betriebsart werden zweite Projektionsdaten eines Teilbereiches des Untersuchungsbereiches erfasst. Anschließend werden die ersten und zweiten Projektionsdaten zu dritten Projektionsdaten kombiniert. Die dritten Projektionsdaten setzen sich dabei aus den zweiten Projektionsdaten für den Teilbereich des Untersuchungsbereiches sowie den ersten Projektionsdaten für den restlichen Bereich des Untersuchungsbereiches, d h. den Differenzbereich zwischen dem Untersuchungsbereich und dem Teilbereich, zusammen. Anschließend werden die Bilder anhand der dritten Projektionsdaten rekonstruiert.

Dies bringt insbesondere den Vorteil mit sich, dass die Kegelstrahlprojektionen des Teilbereiches mit einer hohen Auflösung erfasst werden, so dass auch kleine Details des Teilbereiches sichtbar werden. Der Effekt der abgeschnittenen Kegelstrahlprojektionen, insbesondere am Rand des Teilbereiches, wird vermindert, da dort auf die ersten Projektionsdaten zurückgegriffen werden kann. In der ersten Betriebsart des Röntgenbildverstärkers kommt es weit weniger zu abgeschnittenen Kegelstrahlprojektionen als im Vergleich zu der zweiten Betriebsart, da in der ersten Betriebsart im wesentlichen der gesamte Untersuchungsbereich abgedeckt wird Insbesondere sind die Kegelstrahlprojektionen in der ersten Betriebsart um den Teilbereich herum nicht abgeschnitten. Unerwünschte Artefakte insbesondere in und um den Teilbereich können so bei der Rekonstruktion vermieden werden.

Bei einer Ausgestaltung der Erfindung kann die Anzahl der ersten Projektionsdaten, welche in der ersten Betriebsart erhalten werden, durch 2D-Interpolation vergrößert werden. Dies ist vorteilhaft, da eine vergrößerte Anzahl von ersten Projektionsdaten zu einer verbesserten Bildqualität der rekonstruierten Bilder, insbesondere im Differenzbereich, führt.

Bei einer bevorzugten Ausgestaltung der Erfindung wird der Teilbereich während der Erfassung der ersten Projektionsdaten in der ersten Betriebsart durch eine Blende abgedeckt, um die Röntgenstrahlungsdosis zu reduzieren. Damit wird in Anbetracht der Tatsache, dass der zweite Teilbereich sowohl in einer ersten als auch in einer zweiten Betriebsart erfasst wird, erreicht, dass der Teilbereich lediglich einmal der Röntgenstrahlung ausgesetzt und somit die Röntgenstrahlungsdosis insgesamt verringert wird. Bei einer weiteren bevorzugten Ausgestaltung der Erfindung wird die Blende für den Fall, dass der Teilbereich unzentriert in dem Untersuchungsbereich liegt, kontinuierlich während der Erfassung der ersten Positionsdaten nachpositioniert. Somit wird der erstrebte Schutz des Teilbereiches auch gewährleistet, wenn sich der Teilbereich relativ zu der Röntgenquelle und dem Röntgenbildverstärker bei der Erfassung der ersten Projektionsdaten verschiebt, während die Röntgenquelle zur Erfassung der Projektionsdaten entlang der Trajektorie um den Untersuchungsbereich geführt wird.

Die Erfindung betrifft ebenfalls eine Röntgeneinrichtung gemäß Anspruch 5, welche in gleicher oder ähnlicher Weise wie das erfindungsgemäße Verfahren ausgebildet und wie oben erläutert weitergebildet sein kann und entsprechende vorteilhafte Ausgestaltung aufweist.

Die Erfindung wird nachstehend anhand der Zeichnung näher erläutert. Es zeigen:

Fig 1 eine schematische Darstellung einer Röntgeneinrichtung, und

Fig 2 Projektionen der ersten, zweiten und dritten Projektionsdaten.

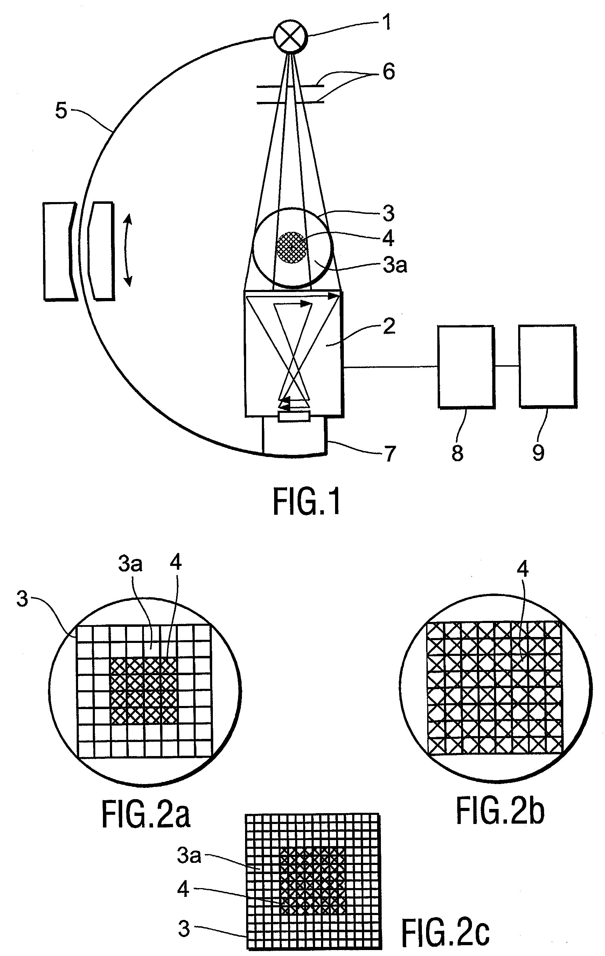

In Fig 1 ist eine schematische Darstellung einer C-Bogen Röntgeneinrichtung 5 gezeigt. Die Röntgeneinrichtung weist eine Röntgenquelle 1, einen Röntgenbildverstärker 2 und eine TV-Kamera 7 auf. Vor der Röntgenquelle 1 ist eine Blende 6 angebracht. Zwischen der Röntgenquelle 1 und dem Röntgenbildverstärker 2 befindet sich der Untersuchungsbereich 3 eines Untersuchungsobjektes, beispielsweise eines Patienten. Innerhalb des Untersuchungsbereiches 3 ist ein Teilbereich 4 vorgesehen. Die Röntgenquelle 1 sowie der Röntgenbildverstärker 2 sind jeweils an den beiden Enden des C-Armes des C-Bogensystemes 5 angebracht.

Zur Erfassung von Kegelstrahl-Projektionsdaten eines Untersuchungsbereiches wird die Röntgenquelle 1 entlang einer Trajektorie um den Untersuchungsbereich 3 gerührt. Durch Änderung der Fokussierungsspannungen des Röntgenbildverstärkers 2 unter Beibehaltung der Anodenspannung kann auf verschiedene Eingangsfelddurchmesser und somit in verschiedene Betriebsarten (Formate) des Röntgenbildverstärkers umgeschaltet werden. Mit kleiner werdendem Eingangsfelddurchmesser steigt die Auflösung.

Fig 2 zeigt die in der ersten Betriebsart erfassten Projektionen mit einer geringen Auflösung (Fig 2a), die in der zweiten Betriebsart erfassten Projektionen mit einer hohen Auflösung (Fig. 2b) sowie eine Kombination dieser Daten (Fig 2c).

Fig 2 c zeigt schematisch, wie die ersten und zweiten Projektionsdaten zu dritten Projektionsdaten kombiniert werden. Im Teilbereich 4 entsprechenden die dritten Projektionsdaten den zweiten Projektionsdaten des Teilbereiches 4. In dem restlichen Bereich 3a des Untersuchungsbereiches 3 stellen die dritten Projektionsdaten die ersten Projektionsdaten des Untersuchungsbereiches 3 dar.

Zunächst wird, wie in Fig. 2a gezeigt ist, ein erster Satz von Kegelstrahl-Projektionsdaten des Untersuchungsbereiches 3 in einer ersten Betriebsart mit maximalen Eingangsfelddurchmesser, wie beispielsweise 38 cm, und folglich geringer Auflösung erfasst. In dieser ersten Betriebsart wird der Untersuchungsbereich 3 im wesentlichen komplett auf den Bildverstärker projiziert, so dass etwa beim Kopf im wesentlichen keine abgeschnittenen Kegelstrahlprojektionen auftreten.

In einem zweiten Durchgang wird, wie in Fig 2b gezeigt ist, ein zweiter Satz von Kegelstrahl-Projektionsdaten des Teilbereiches 4 in einer zweiten Betriebsart des Röntgenbildverstärkers 2 erfasst. In der zweiten Betriebsart ist der Eingangsfelddurchmesser des Bildverstärkers kleiner, beispielsweise 17 cm, gewählt als bei der ersten Betriebsart. Durch den kleineren Eingangsfelddurchmesser wird eine höhere Auflösung des Röntgenbildverstärkers 2 erreicht. Auf der anderen Seite bedingt aber auch der kleinere Eingangsfelddurchmesser, dass der Untersuchungsbereich 3 nicht mehr komplett projiziert werden kann, so dass abgeschnittene Kegelstrahlprojektionen auftreten. Daher wird in diesem zweiten Durchgang lediglich ein Teilbereich 4 des Untersuchungsbereiches 4 erfasst. Dieser Teilbereich 4 wird dabei so gewählt, dass er den interessierenden Bereich (region of interest) bzw. den zu untersuchenden Bereich des Untersuchungsbereiches 3
darstellt, da es für diesen zu untersuchenden Bereich oftmals nötig ist, die Details des Untersuchungsbereiches 3 hochaufgelöst
darzustellen. Details, wie beispielsweise die Struktur von feinen Knochen in einem Schädel, lassen sich nur bei einer hohen Auflösung erkennen. Der Röntgenbildverstärker 2 wird daher in die zweite Betriebsart ein-gestellt und es wird ein zweiter Satz von Kegelstrahl-Projektionsdaten von dem zweiten Teilbereich 4 erfasst.

Es werden somit zwei verschiedene Durchläufe zur Erfassung von Projektionsdaten mit unterschiedlichen geometrischen Einstellungen durchgeführt.

Nach Erfassung des ersten und zweiten Satzes von Kegelstrahl-Projektionsdaten wird der erste Satz von Kegelstrahl-Projektionsdaten des Untersuchungsbereiches 3 (Fig. 2a) und der zweite Satz von Kegelstrahl-Projektionsdaten des Teilbereiches 4 (Fig. 2b) zu einem dritten Satz von Kegelstrahl-Projektionsdaten kombiniert (Fig 2c). Der dritte Satz von Kegelstrahl-Projektionsdaten wird im wesentlichen aus dem ersten Satz von Kegelstrahl-Projektionsdaten gebildet. Allerdings werden die ersten Projektionsdaten für den Teilbereich 4 dann durch die zweiten Projektionsdaten für den Teilbereich 4 ersetzt. Es sei angemerkt, das erste Projektionsdaten auch für den Teilbereich 4 vorhanden sind, da der Teilbereich 4 in dem Untersuchungsbereich 3 umfasst ist, während zweite Projektionsdaten lediglich für den zweiten Teilbereich 4, nicht aber für den gesamten Untersuchungsbereich 3 vorhanden sind. Sofern zweite Projektionsdaten vorhanden sind, werden sie daher gegenüber den ersten Projektionsdaten bevorzugt und ersetzen die ersten Projektionsdaten. Als Ergebnis erhält man somit dritte Projektionsdaten, welche den Teilbereich 4 in einer hohen Auflösung und den restlichen Bereich 3a des Untersuchungsbereiches 3 - derjenigen Bereich des Untersuchungsbereiches, der nicht durch den Teilbereich 4 abgedeckt ist - mit einer geringen Auflösung abbilden. Für die Bildung der dritten Projektionsdaten sind auch geeignete Mittel (Bildverarbeitungseinrichtung) 8 bei der Röntgeneinrichtung gemäß Fig. 1 vorgesehen.

Die Rekonstruktion von Bildern wird dann anhand der dritten Projektionsdaten mittels eines Rekonstruktionsrechners 9 durchgeführt. Die Rekonstruktion kann beispielsweise durch einen Algorithmus der gefilterten Rückprojektion durchgeführt werden. Wenn die Trajektorie bei der Erfassung kreisförmig war, kann ferner der Feldkamp-Algorithmus zur Rekonstruktion verwendet werden.

Der erste Satz von Projektionsdaten in einer ersten Betriebsart kann auch mit einer reduzierten räumlichen Abtastrate durchgeführt werden, da die Bildqualität des Differenzbereiches 3a sekundär ist, solange die Bildqualität des Teilbereiches 4 ausreichend gut ist.

Alternativ dazu kann die Anzahl der ersten Projektionsdaten, welche in der ersten Betriebsart erhalten wurden, durch 2D-Interpolation vergrößert werden, um die Bildqualität in dem Differenzbereich 3a nach dem Rekonstruieren zu verbessern, falls dies erforderlich ist.

Sowohl der Rotationslauf in der ersten als auch in der zweiten Betriebsart des Röntgenbildverstärkers können normal bei 1-2° oder bei einer reduzierten Winkelabtastrate (z B. 4°) Projektionsbilder aufgenommen werden, um die Röntgenstrahlungsdosis des Untersuchungsbereiches zu reduzieren.

Um die Röntgenstrahlungsdosis zu reduzieren, kann bei einer Datenerfassung in der ersten Betriebsart, d. h. mit einer geringen Auflösung, der Teilbereich 4 mittels der Blende 6 (ausgeführt als Ringblende) ausgeblendet werden. Diese ersten Projektionsdaten des Teilbereiches 4 werden letztendlich nicht benötigt, da diese Daten durch die zweiten Projektionsdaten des Teilbereiches 4 ersetzt werden.

Wenn sich der Teilbereich 4 zentriert in dem Untersuchungsbereich 3 befindet, so kann die vorstehend beschriebene Erfassung der Kegelstrahl-Projektionsdaten erfolgen. Befindet sich der Teilbereich 4 jedoch unzentriert in dem Untersuchungsbereich 3, so muss die Blende während des Rotationslaufes in der ersten Betriebsart kontinuierlich nachpositioniert werden, damit der Teilbereich 4 immer exakt ausgeblendet bleibt.

Wenn eine Angiografie durchgeführt werden soll, braucht bei dem ersten Rotationslauf in der ersten eine geringe Auflösung aufweisenden Betriebsart das Kontrastmittel nicht verwendet werden. Lediglich beim zweiten Rotationslauf in der zweiten Betriebsart muss ein Kontrastmittel verwendet werden.

## Patentansprüche

1. Verfahren zur Rekonstruktion von Bildern aus Kegelstrahl-Projektionsdaten eines Untersuchungsbereiches (3) eines Untersuchungsobjektes, wobei die Kegelstrahlprojektionsdaten mittels einer eine Röntgenquelle (1) und einen Röntgenbildverstärker (2) aufweisenden Röntgeneinrichtung erfasst werden und die Röntgenquelle (1) zur Erfassung der Projektionsdaten entlang einer Trajektorie um den Untersuchungsbereich (3) geführt wird, mit den Schritten:
- Erfassen von ersten Projektionsdaten des Untersuchungsbereiches (3) in einer ersten eine geringe Auflösung aufweisenden Betriebsart des Röntgenbildverstärkers (2),
- Erfassen von zweiten Projektionsdaten eines Teilbereiches (4) des Untersuchungsbereiches (3) in einer zweiten eine hohe Auflösung aufweisenden Betriebsart des Röntgenbildverstärkers (2),
- Kombinieren der ersten und zweiten Projektionsdaten zu dritten Projektionsdaten, wobei die dritten Projektionsdaten in dem Teilbereich (4) des Untersuchungsbereiches (3) die zweiten Projektionsdaten und in dem restlichen Bereich (3 a) des Untersuchungsbereiches die ersten Projektionsdaten darstellen, und
- Rekonstruieren von Bildern anhand der dritten Projektionsdaten.

2. Verfahren nach Anspruch 1,
wobei die Anzahl der in der ersten Betriebsart erhaltenen ersten Projektionsdaten des Untersuchungsbereiches (3) durch 2D-Interpolation vergrößert wird.

3. Verfahren nach Anspruch 1,
wobei der Teilbereich (4) während der Erfassung der ersten Projektionsdaten in der ersten Betriebsart zur Reduzierung der Röntgenstrahlungsdosis durch eine Blende (6) abgedeckt wird.

4. Verfahren nach Anspruch 3, wobei die Blende (6) kontinuierlich während der Erfassung der ersten Positionsdaten nachpositioniert wird, wenn der Teilbereich (4) unzentriert in dem Untersuchungsbereich (3) angeordnet ist.

5. Röntgeneinrichtung, insbesondere zur Durchführung des Verfahrens nach Anspruch 1, mit einer Röntgenquelle (1) und einem Röntgenbildverstärker (2) zur Erfassung von Kegelstrahl-Projektionsdaten eines Untersuchungsbereiches (3) eines Untersuchungsobjektes, wobei die Röntgenquelle (1) zur Erfassung der Projektionsdaten entlang einer Trajektorie um den Untersuchungsbereich (3) geführt wird und wobei erste Projektionsdaten des Untersuchungsbereiches (3) in einer ersten eine geringe Auflösung aufweisenden Betriebsart des Röntgenbildverstärkers (2) und zweite Projektionsdaten eines Teilbereiches (4) des Untersuchungsbereiches (3) in einer zweiten eine hohe Auflösung aufweisenden Betriebsart des Röntgenbildverstärkers (2) erfasst werden, und ferner mit Mitteln zum Kombinieren der ersten und zweiten Projektionsdaten zu dritten Projektionsdaten, wobei die dritten Projektionsdaten in dem Teilbereich (4) des Untersuchungsbereiches (3) die zweiten Projektionsdaten und in dem restlichen Bereich (3a) des Untersuchungsbereiches (3) die ersten Projektionsdaten darstellen, und einer Bildverarbeitungseinrichtung zum Rekonstruieren von Bilder anhand der dritten Projektionsdaten.
